(19) Europäisches Patentamt
European Patent Office
Office européen des brevets

(11) **EP 1 217 399 B1**

(12) **FASCICULE DE BREVET EUROPEEN**

(45) Date de publication et mention de la délivrance du brevet:
**25.02.2015 Bulletin 2015/09**

(51) Int Cl.:
***G02B 6/02*** (2006.01)

(21) Numéro de dépôt: **01402624.9**

(22) Date de dépôt: **11.10.2001**

(54) **Fibre pour la compensation de dispersion chromatique d'une fibre NZ-DSF à dispersion chromatique positive**

Glasfaser zur Kompensation der chromatischen Dispersion einer NZ-DSF-Glasfaser mit positiver chromatischer Dispersion

Optical fiber for chromatic dispersion compensation of a NZ-DSF-fiber with positive chromatic dispersion

(84) Etats contractants désignés:
**AT BE CH CY DE DK ES FI FR GB GR IE IT LI LU MC NL PT SE TR**

(30) Priorité: **16.10.2000 FR 0013209**

(43) Date de publication de la demande:
**26.06.2002 Bulletin 2002/26**

(73) Titulaire: **Draka Comteq B.V.**
**1083 HJ Amsterdam (NL)**

(72) Inventeurs:
• **Sillard, Pierre**
**78150 Le Chesnay (FR)**
• **Gorlier, Maxime**
**75017 Paris (FR)**
• **de Montmorillon, Louis-Anne**
**75017 Paris (FR)**
• **Fleury, Ludovic**
**78390 Bois d'Arcy (FR)**
• **Beaumont, Florent**
**78700 Conflans Ste Honorine (FR)**
• **Nouchi, Pascale**
**78600 Maisons Laffitte (FR)**

(74) Mandataire: **Algemeen Octrooi- en Merkenbureau B.V.**
**P.O. Box 645**
**5600 AP Eindhoven (NL)**

(56) Documents cités:
**EP-A- 0 668 520      EP-A- 1 030 199**
**EP-A- 1 067 412      WO-A-99/42869**
**US-A- 5 995 694**

• **ANTOS A J ET AL: "DESIGN AND CHARACTERIZATION OF DISPERSION COMPENSATING FIBER BASED ON THE LP01 MODE" JOURNAL OF LIGHTWAVE TECHNOLOGY, IEEE. NEW YORK, US, vol. 12, no. 10, 1 octobre 1994 (1994-10-01), pages 1739-1744, XP000469527 ISSN: 0733-8724**

**Description**

La présente invention concerne le domaine des transmissions par fibre optique, et plus spécifiquement, la compensation de la dispersion chromatique et de la pente de dispersion chromatique dans des systèmes de transmission par fibre optique.

Pour des fibres optiques, on qualifie généralement le profil d'indice en fonction de l'allure du graphe de la fonction qui associe au rayon de la fibre l'indice de réfraction. On représente de façon classique sur les abscisses la distance r au centre de la fibre, et sur les ordonnées la différence entre l'indice de réfraction et l'indice de réfraction de la gaine de la fibre. On parle ainsi de profil d'indice en "échelon", en "trapèze" ou en "triangle" pour des graphes qui présentent des formes respectives d'échelon, de trapèze ou de triangle. Ces courbes sont généralement représentatives du profil théorique ou de consigne de la fibre, les contraintes de fabrication de la fibre pouvant conduire à un profil sensiblement différent.

Dans les nouveaux réseaux de transmission à hauts débits et multiplexés en longueur d'onde, il est avantageux de gérer la dispersion chromatique, notamment pour des débits supérieurs ou égaux à 10 Gbit/s; l'objectif est d'obtenir, pour toutes les valeurs de longueur d'onde du multiplex, une compensation chromatique cumulée sensiblement nulle sur la liaison, de sorte à limiter l'élargissement des impulsions. Sur l'ensemble d'un système de transmission, une valeur cumulée de quelques centaines de ps/nm pour la dispersion est acceptable. Il est aussi intéressant d'éviter au voisinage des longueurs d'onde utilisées dans le système les valeurs nulles de la dispersion chromatique, pour lesquelles les effets non-linéaires sont plus importants. Enfin, il est aussi intéressant de limiter la pente de dispersion chromatique sur la plage du multiplex de sorte à éviter ou limiter les distorsions entre les canaux du multiplex. Ce problème de compensation de la dispersion chromatique et de la pente de la dispersion chromatique est particulièrement aigu pour les systèmes de transmission à très haut débit - typiquement pour les systèmes de transmission à multiplexage en longueur d'onde avec un débit par canal de 40 Gbit/s et au-delà. Le problème est d'autant plus aigu que la largeur de bande augmente et atteint des valeurs supérieures ou égales à 30 nm, voire 35 nm.

On utilise classiquement comme fibre de ligne pour les systèmes de transmissions à fibres optiques des fibres à saut d'indice comme fibre de ligne; ces fibres sont couramment appelées fibres monomode ou SMF (de l'anglais "single mode fiber") et sont décrites dans la recommandation ITU-T G.652. La demanderesse commercialise ainsi sous référence ASMF 200 une fibre monomode à saut d'indice présentant une longueur d'onde $\lambda_0$ d'annulation de la dispersion chromatique entre 1300 et 1320 nm, et une dispersion chromatique de 3,5 ps/(nm.km) dans une plage de 1285-1330 nm, et de 18 ps/nm.km à 1550 nm. La pente de dispersion chromatique à 1550 nm est de l'ordre de 0,05 ps/(nm$^2$.km). Dans les systèmes de transmission connus, cette fibre est utilisée pour la transmission de signaux à des longueurs d'onde voisines de 1550 nm (bande C).

Sont aussi apparues sur le marché des fibres à dispersion décalée, ou DSF (acronyme de l'anglais "Dispersion shifted fibers"). Ces fibres sont telles qu'à la longueur d'onde de transmission à laquelle elles sont utilisées, qui est en général différente de la longueur d'onde de 1,3 $\mu$m pour laquelle la dispersion de la silice est sensiblement nulle, leur dispersion chromatique est sensiblement nulle; c'est à dire que la dispersion chromatique de la silice, non nulle, est compensée - d'où l'emploi du terme décalé - par une augmentation de l'écart d'indice $\Delta$n entre le coeur de la fibre et la gaine optique. Cet écart d'indice permet de décaler la longueur d'onde pour laquelle la dispersion chromatique est nulle; il est obtenu par l'introduction de dopants dans la préforme, lors de la fabrication de celle-ci, par exemple par un processus de MCVD connu en soi, et qui n'est pas décrit plus en détail ici.

On qualifie de NZ-DSF+ (acronyme de l'anglais "non-zero dispersion shifted fibers") des fibres à dispersion décalée, présentant une dispersion chromatique non-nulle et positive pour les longueurs d'onde auxquelles elles sont utilisées. Ces fibres présentent pour ces longueurs d'onde une dispersion chromatique faible, typiquement inférieure à 10 ps/(nm.km) à 1550 nm, et une pente de dispersion chromatique entre 0,04 et 0,1 ps/(nm$^2$.km). Ainsi, FR-A-2 790 107 propose une fibre de ligne, tout particulièrement adaptée à une transmission à multiplexage en longueurs d'onde dense, avec un espacement entre les canaux de 100 GHz ou moins pour un débit par canal de 10 Gbit/s ou plus ; cette fibre présente pour une longueur d'onde de 1550 nm une aire effective supérieure ou égale à 60 $\mu$m$^2$, une dispersion chromatique comprise entre 6 et 10 ps/(nm.km), et une pente de dispersion chromatique inférieure à 0,07 ps/(nm$^2$.km).

Pour compenser la dispersion chromatique et la pente de dispersion chromatique dans des fibres SMF ou des fibres NZ-DSF utilisées comme fibres de ligne, il est connu d'utiliser des faibles longueurs de fibre de compensation de dispersion ou DCF (Dispersion Compensating Fiber en langue anglaise). Cette fibre présente une dispersion chromatique et une pente de dispersion chromatique ayant un signe opposé à celui de la dispersion chromatique et de la pente de dispersion chromatique de la fibre de ligne. Un exemple dans le cas d'une fibre de ligne SMF est donné dans L. Grüner-Nielsen et autres, Large volume Manufacturing of dispersion compensating fibers, OFC'98 Technical Digest TuD5. D'autres exemples de fibres de compensation de dispersion adaptées à des fibres SMF sont décrits dans EP-A-0 935 146, US-A-5 568 583 ou US-A-5 361 319.

EP-0 668 520 décrit une fibre de compensation de dispersion montrant des valeurs de dispersion entre -120ps/nm.km et -320ps/nm.km. La fibre présente un coeur, une tranchée déprimée et un anneau. Cette fibre à compensation de dispersion a des pertes typiques inférieures à 0.5 dB/km à la longueur d'onde fonctionnement.

WO-A-99 13366 propose une fibre de compensation de dispersion, qui est destinée à être utilisée dans des boîtiers de compensation, pour compenser la dispersion chromatique et la pente de dispersion chromatique d'une fibre du type commercialisé par la société Lucent sous la marque "True Wave"; cette fibre présente une dispersion chromatique entre 1,5 et 4 ps/(nm.km) et une pente de dispersion chromatique de 0,07 ps/(nm$^2$.km). La fibre de compensation de dispersion proposée présente dans un exemple de réalisation une dispersion chromatique de -27 ps/(nm.km) et une pente de dispersion chromatique de -1,25 ps/(nm$^2$.km), pour une longueur d'onde de coupure théorique inférieure à 1100 nm.

EP-A-0 674 193 propose une fibre de compensation de dispersion pour fibre SMF, présentant une valeur de dispersion chromatique entre -85 et -20 ps/(nm.km); la longueur d'onde de coupure théorique n'est pas précisée dans ce document; un calcul des propriétés de la fibre montre que cette longueur d'onde de coupure théorique est inférieure à 1100 nm.

US-A-5 838 867 propose une fibre de dispersion de compensation, destinée à compenser en ligne ou en boîtier la dispersion chromatique d'une fibre de ligne à dispersion décalée. La dispersion chromatique à 1550 nm des exemples de fibres proposés est comprise entre -60 et -2 ps/(nm.km); la longueur d'onde de coupure mesurée sur deux mètres de fibre est inférieure à 1000 nm, et un calcul des propriétés de la fibre montre que la longueur d'onde de coupure théorique est inférieure à 1100 nm.

La société Lucent Technologies commercialise des modules de compensation de dispersion à large bande (en bande C), qui permettent de compenser la dispersion chromatique et la pente de dispersion chromatique d'une fibre SMF. Le rapport entre la dispersion chromatique et la pente de dispersion chromatique de la fibre utilisée dans ces modules est de l'ordre de 295 nm pour une longueur d'onde de 1550 nm. La fibre présente une dispersion à 1550 nm voisine de -100 ps/(nm.km), et une longueur d'onde de coupure théorique inférieure à 1800 nm. La société Lucent Technologies commercialise encore des modules de compensation de dispersion pour des fibres NZ-DSF en bande C. Ces modules ne compensent que 65% de la pente de dispersion chromatique d'une fibre NZ-DSF de type "True Wave Reduced Slope" (dispersion chromatique entre 1,5 et 4 ps/(nm.km) et pente de dispersion chromatique de l'ordre de 0,045 ps/(nm$^2$.km)). La valeur typique du rapport entre la dispersion chromatique et la pente de dispersion chromatique est de l'ordre de 150 nm pour une longueur d'onde de 1550 nm. La fibre présente une dispersion à 1550 nm voisine de -100 ps/(nm.km), et une longueur d'onde de coupure théorique inférieure à 1800 nm.

Craig D. Poole et autres, Optical Fiber-based Dispersion Compensation Using Higher Order Modes Near Cutoff suggère d'injecter dans une fibre de compensation de dispersion la lumière dans un mode pour lequel la longueur d'onde de coupure est proche de la longueur d'onde utilisé. Comme la dispersion chromatique est importante au voisinage de la longueur d'onde de coupure, la quantité de fibre de compensation de dispersion nécessaire est plus faible. Cette solution implique un convertisseur de mode en entrée de la fibre de compensation de dispersion; le convertisseur doit présenter un bon rendement pour que l'ensemble de la lumière soit effectivement transmis dans le mode retenu.

US-A-5 999 679 propose une fibre de compensation de dispersion, qui présente une forte aire effective et une longueur d'onde de coupure théorique supérieure à 1900 nm. Deux exemples de fibres proposés dans ce document présentent à 1550 nm une dispersion chromatique négative voisine de -280 ps/(nm.km), et un rapport entre la dispersion chromatique et la pente de dispersion chromatique qui vaut 116 ou 227 nm. L'aire effective des fibres proposées vaut 19 ou 22 µm$^2$. Le profil proposé est un profil en rectangle avec une tranchée enterrée et un anneau. Pour ces deux exemples, les pertes par courbure sont très importantes (de l'ordre de 0.3 dB pour un enroulement de 100 tours avec un rayon de 30 mm à 1550 nm, et de l'ordre de 600 dB/m pour un enroulement avec un rayon de 10 mm à 1550 nm). En outre, la dispersion modale de polarisation des fibres de ce document est difficile à maîtriser .

Le problème que posent les fibres de ce document réside dans les pertes par courbures et la dispersion modale de polarisation.

L'invention résout ce problème. Elle propose une fibre qui peut être utilisée comme fibre de ligne ou dans un module, pour compenser la dispersion chromatique et la pente de dispersion chromatique d'une fibre SMF ou NZ-DSF. La fibre présente une valeur du rapport entre la dispersion chromatique et l'atténuation qui est supérieure à celle de l'état de la technique.

Plus précisément, l'invention propose une fibre optique présentant une longueur d'onde de coupure théorique supérieure ou égale à 1800 nm, une dispersion chromatique négative et supérieure ou égale à -150 ps/(nm.km) et un rapport entre la dispersion chromatique et la pente de dispersion chromatique entre 30 et 500 nm pour une longueur d'onde de 1550 nm.

La fibre peut avantageusement présenter une ou plusieurs des caractéristiques complémentaires suivantes :

- des pertes par courbure inférieures à 400 dB/m, et de préférence inférieures à 100 dB/m, pour une longueur d'onde entre 1530 et 1620 nm, lorsque la fibre est enroulée sur un manchon de 10 mm de rayon;
- des pertes par courbure inférieures à 0,05 dB, et de préférence inférieures à 10$^{-3}$ dB, pour une longueur d'onde entre 1530 et 1620 nm, pour un enroulement de 100 tours sur un manchon de 30 mm de rayon;

- un rapport entre la dispersion chromatique et l'atténuation inférieur ou égal à -100 ps/(nm.dB), et de préférence inférieur ou égale à -150 ps/(nm.dB), pour une longueur d'onde entre 1530 et 1620 nm;
- pour une longueur d'onde de 1550 nm une aire effective supérieure ou égale à 12 $\mu$m$^2$, de préférence supérieure ou égale à 15 $\mu$m$^2$, voire à 20 $\mu$m$^2$;
- une dispersion chromatique inférieure ou égale à -20 ps/(nm.km), de préférence inférieure ou égale à -50 ps/(nm.km), pour une longueur d'onde de 1550 nm;
- pour une longueur d'onde de 1550 nm une sensibilité aux micro-courbures inférieure ou égale à 1, et de préférence inférieure ou égale à 0,5;
- une différence entre l'indice en tout point de la fibre et l'indice de la gaine inférieure ou égale à 30.10$^{-3}$, et de préférence inférieure ou égale à 25.10$^{-3}$.
- une dispersion modale de polarisation inférieure ou égale à 0,5 ps/km$^{1/2}$;
- une atténuation inférieure à 1 dB/km;
- une longueur d'onde de coupure théorique supérieure ou égale à 1850 nm.

La fibre présente avantageusement un profil d'indice en rectangle ou en trapèze avec une tranchée déprimée et un anneau. Dans ce cas, le profil peut être caractérisé par :

- une différence ($\Delta n_1$) entre l'indice du rectangle ou du trapèze et l'indice de la gaine comprise entre 16.10$^{-3}$ et 24.10$^{-3}$, avec un rayon ($r_1$) de la partie de la fibre présentant un indice supérieur à celui de la gaine compris entre 1,5 et 2,3 $\mu$m;
- une différence ($\Delta n_2$) entre l'indice de la tranchée déprimée et l'indice de la gaine comprise entre -7,5.10$^{-3}$ et -3,5,10$^{-3}$, et un rayon extérieur ($r_2$) de cette tranchée est compris entre 4,5 et 6,9 $\mu$m;
- une différence ($\Delta n_3$) entre l'indice de l'anneau et l'indice de la gaine comprise entre 3.10$^{-3}$ et 16.10$^{-3}$, de préférence entre 3.10$^{-3}$ et 14.10$^{-3}$ avec un rayon extérieur ($r_3$) de cet anneau compris entre 6,8 et 8,5 $\mu$m.

On peut aussi utiliser une ou plusieurs des caractéristiques suivantes pour qualifier le profil :

- le double de l'intégrale du produit du rayon par l'indice entre un rayon nul et le rayon ($r_1$) extérieur de la partie centrale de la fibre présentant un indice supérieur à celui de la gaine compris entre 40.10$^{-3}$ et 100.10$^{-3}$ $\mu$m$^2$, de préférence entre 50.10$^{-3}$ et 80.10$^{-3}$ $\mu$m$^2$;
- le triple de l'intégrale du produit du carré du rayon par l'indice entre un rayon nul et le rayon ($r_1$) extérieur de la partie centrale de la fibre présentant un indice supérieur à celui de la gaine compris entre 60.10$^{-3}$ et 200.10$^{-3}$ $\mu$m$^3$, de préférence entre 70.10$^{-3}$ et 150.10$^{-3}$ $\mu$m$^3$;
- le double de l'intégrale du produit du rayon par l'indice entre le rayon intérieur et le rayon extérieur de l'anneau compris entre 140.10$^{-3}$ et 350.10$^{-3}$ $\mu$m$^2$, de préférence entre 160.10$^{-3}$ et 310.10$^{-3}$ $\mu$m$^2$.

L'invention propose aussi un système de transmission, dont la fibre de ligne comprend une fibre monomode à saut d'indice, ou une fibre à dispersion décalée, compensée en dispersion par une telle fibre. Dans ce cas, la dispersion chromatique cumulée pour chaque canal entre 1530 nm et 1610 nm est par exemple inférieure à 100 ps/nm, et de préférence inférieure à 50 ps/nm, en moyenne sur 100 km de transmission.

La fibre de ligne peut être constituée uniquement de fibre monomode à saut d'indice, ou uniquement de fibre à dispersion décalée. On peut aussi prévoir que la fibre de ligne est constituée de fibre monomode à saut d'indice et de fibre qui en compense la dispersion; ou encore, on peut prévoir que la fibre de ligne est constituée de fibre à dispersion décalée et de fibre qui en compense la dispersion.

L'invention propose enfin un module de compensation de dispersion, comprenant un amplificateur et une section de la fibre précédemment décrite.

D'autres caractéristiques et avantages de l'invention apparaîtront à la lecture de la description qui suit de modes de réalisation de l'invention, donnés à titre d'exemple et en référence aux dessins annexés, qui montrent :

- figures 1 et 2, des représentations schématiques de modes de réalisation d'un système de transmission selon l'invention;
- figures 3 et 4, des exemples de profils de fibres selon l'invention.

L'invention propose une fibre de compensation de dispersion chromatique adaptée à compenser la dispersion chromatique d'une fibre monomode à saut d'indice ou d'une fibre NZ-DSF dans la bande C et dans la bande L; la fibre présente une longueur d'onde de coupure théorique supérieure ou égale à 1800 nm, une dispersion chromatique négative et supérieure ou égale à -150 ps/(nm.km) et un rapport entre la dispersion chromatique et la pente de dispersion chromatique entre 30 et 500 nm pour une longueur d'onde de 1550 nm. Pour cette longueur d'onde, le facteur de mérite ou rapport de la dispersion chromatique à l'atténuation est avantageusement inférieur ou égal à -100 ps/(nm.dB). La fibre présente encore une aire effective importante, qui permet de réduire les effets non-linéaires, même pour de fortes puissances de transmission.

Par rapport au document US-A-5 999 679, le choix d'une dispersion chromatique négative et au-dessus de -150 ps/(nm.km) permet de diminuer les pertes par courbure, toutes choses égales par ailleurs. Pour un même facteur de mérite, des valeurs de dispersion chromatique de l'ordre de -280 ps/(nm.km) ou moins proposées dans ce document de l'état de la technique engendrent des pertes par courbures plus importantes, difficilement compatibles avec une utilisation de la fibre de compensation de dispersion dans un module ou comme fibre de ligne pour ces valeurs de dispersion chromatique.

En outre, le choix d'une valeur de dispersion chromatique supérieure à -150 ps/(nm.km) permet d'améliorer la dispersion modale de polarisation. Pour une même valeur d'ovalité d'une fibre, une dispersion chromatique moins négative engendre une meilleure dispersion modale de polarisation. Les fibres de l'invention présentent typiquement une valeur de dispersion modale de polarisation en-dessous de 0,5 ps/km$^{1/2}$.

La fibre de l'invention permet de compenser la dispersion chromatique et la pente de dispersion chromatique pour des systèmes de transmission en bande C et en bande L utilisant comme fibre de ligne de la fibre monomode à saut d'indice classique, ou encore de la fibre NZ-DSF. Comme indiqué plus haut, la fibre SMF présente typiquement autour de 1550 nm une dispersion chromatique de 15 à 20 ps/(nm.km) et une pente de dispersion chromatique autour de 0,06 ps/(nm$^2$.km), soit un rapport typique de la dispersion chromatique à la pente de dispersion chromatique de l'ordre de 300. Les fibres NZ-DSF présentent quant à elles des rapports de la dispersion chromatique à la pente de dispersion chromatique allant de 50 nm à 200 nm pour cette même valeur de longueur d'onde.

L'invention concerne aussi les systèmes de transmission par fibre optique, dont la fibre de ligne comprend une fibre SMF ou une fibre NZ-DSF; cette fibre présente une dispersion chromatique positive autour de 1550 nm et est compensée en dispersion chromatique et en pente de dispersion chromatique par une fibre selon l'invention.

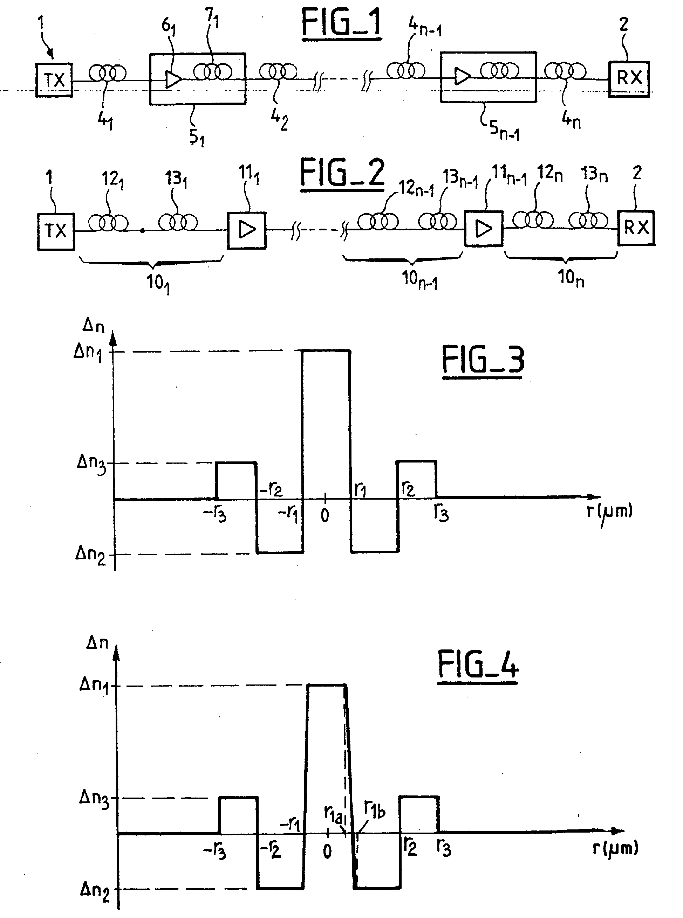

La figure 1 montre une représentation schématique d'un premier mode de réalisation d'un système de transmission selon l'invention. On a représenté sur la figure un émetteur TX 1 et un récepteur RX 2. Ces deux éléments sont reliés par une pluralité de tronçons de fibre de ligne $4_1$ à $4_n$. On entend ici par fibre de ligne la fibre s'étendant le long du système de transmission, et dont la longueur correspond sensiblement à la longueur du système. Dans le mode de réalisation de la figure 1, la fibre de ligne est constituée de fibre SMF ou NZ-DSF. Entre les tronçons sont disposés des modules de compensation de dispersion $5_1$ à $5_{n-1}$. Un module de compensation de dispersion $5_i$ comprend un amplificateur $6_i$, typiquement un amplificateur à fibre dopée à l'erbium, suivi d'une section de fibre de compensation de dispersion $7_i$. Ne sont pas portés à la figure les filtres et autres éléments sans incidence directe sur le fonctionnement de l'invention.

La lumière provenant de la fibre de ligne est amplifiée, puis traverse la section de fibre de compensation de dispersion, dans laquelle la dispersion chromatique et la pente de dispersion chromatique sont compensées. On pourrait aussi inverser les positions respectives dans le module de compensation de la fibre de dispersion de compensation et de l'amplificateur.

La figure 2 montre un autre mode de réalisation d'un système de transmission selon l'invention. Dans le mode de réalisation de la figure 2, la fibre de compensation de dispersion de l'invention est aussi utilisée comme fibre de ligne. On retrouve sur la figure l'émetteur TX 1 et le récepteur RX 2. Ces deux éléments sont reliés par une pluralité de tronçons de fibre de ligne $10_i$, séparés par des répéteurs $11_i$. Chaque répéteur comprend des amplificateurs, filtres ou autres éléments connus en soi, et n'est pas décrit plus en détail. Chaque tronçon de fibre de ligne $10_i$ comprend une section $12_i$ de fibre SMF ou NZ-DSF, et une section $13_i$ de fibre de compensation de dispersion selon l'invention.

Les modes de réalisation des figures 1 et 2 constituent deux extrêmes : dans le mode de réalisation de la figure 1, la fibre de ligne est uniquement de la fibre SMF ou NZ-DSF, et toute la fibre de compensation de dispersion est prévue dans des répéteurs discrets. Dans ce cas, la fibre de compensation de dispersion ne contribue aucunement à la longueur du système de transmission. Ce mode de réalisation est particulièrement adapté à des liaisons existantes, par exemple en fibre SMF, qui peuvent ainsi être modifiées pour permettre une transmission en bande C et en bande L, avec un multiplexage en longueur d'onde à haut débit. A l'inverse, dans le mode de réalisation de la figure 2, la fibre de compensation de dispersion sert de fibre de ligne, et les répéteurs ne comprennent pas de fibre de compensation de dispersion. Des solutions intermédiaires entre la solution de la figure 1 et celle de la figure 2 sont possibles.

Dans un cas comme dans l'autre les longueurs respectives $L_{DCF}$ et $L_+$ de la fibre de compensation de dispersion de l'invention et de la fibre à dispersion chromatique positive sont choisies de sorte à ce que:

$$L_{DCF} \times C_{DCF} = -L_+ \times C_+$$

où $C_{DCF}$ est la dispersion chromatique de la fibre de compensation de dispersion à une longueur d'onde choisie entre 1530 et 1610 nm, et $C_+$ la dispersion chromatique positive de la fibre SMF ou NZ-DSF à cette même longueur d'onde. Cette relation assure que la dispersion chromatique cumulée dans la fibre à dispersion chromatique positive est compensée dans la fibre de compensation de dispersion pour cette longueur d'onde. On peut relâcher cette contrainte, et admettre une marge d'erreur de l'ordre de 20%; tout en conservant une compensation suffisante.

A titre d'exemple, on peut considérer un système de transmission du genre de celui de la figure 1, avec des tronçons de fibre de ligne SMF d'une longueur $L_+$ de 100 km, et une longueur $L_{DCF}$ de fibre de 22 km dans les répéteurs. A 1550 nm, la fibre SMF présente une dispersion chromatique de 18 ps/(nm.km) et une pente de dispersion chromatique de 0,06 ps/(nm$^2$.km); la fibre DCF est une fibre du genre décrit en référence à la figure 3 et correspond plus précisément à l'exemple 4 du tableau 1. Elle a pour une longueur d'onde de 1550 nm une dispersion chromatique de -81 ps/(nm.km) et un rapport dispersion chromatique sur pente de dispersion de 305 nm, et pour une longueur d'onde de 1590 nm une dispersion chromatique de-95 ps/(nm.km) et un rapport dispersion chromatique sur pente de dispersion de 480 nm. Dans un tel cas, la dispersion chromatique cumulée à 1550 nm est proche de 0 ps/nm. On peut transmettre un signal multiplexé en longueurs d'onde, avec une dispersion chromatique cumulée inférieure à 50 ps/nm pour chaque canal entre 1530 nm et 1610 nm, pour les 100 km que forme un tronçon du système de transmission. On arrive de la sorte à limiter la dispersion chromatique cumulée à des valeurs inférieures à quelques centaines de ps/nm, comme indiqué plus haut. En moyenne, pour 100 km de transmission sur chaque canal, on limite la dispersion chromatique cumulée à moins de 100 ps/nm.

On considère maintenant un autre exemple, toujours du genre représenté à la figure 1, mais avec comme fibre de ligne de la fibre NZ-DSF. La fibre de ligne présente à 1550 nm une dispersion chromatique de 8 ps/(nm.km) et une pente de dispersion chromatique de 0.06 ps/(nm$^2$.km). La longueur $L_+$ vaut 100 km, tandis que la longueur $L_{DCF}$ de fibre selon l'invention vaut 10 km. La fibre de compensation de dispersion est la fibre de l'exemple 3 du tableau 1. Dans ce cas, la dispersion chromatique cumulée est inférieure à 50 ps/nm pour chaque canal entre 1530 nm et 1610 nm, pour les 100 km que forme un tronçon du système de transmission. Dans un cas comme dans l'autre, la fibre de l'invention permet de compenser la dispersion chromatique comme la pente de dispersion chromatique de la fibre de ligne.

On décrit maintenant les caractéristiques de la fibre de compensation de dispersion de l'invention, avant d'en donner un mode de réalisation. La fibre présente une longueur d'onde de coupure théorique supérieure à 1800 nm, et pour une longueur d'onde de 1550 nm, une dispersion chromatique négative et supérieure ou égale à -150 ps/(nm.km), et un rapport entre la dispersion chromatique et la pente de dispersion chromatique entre 30 nm et 500 nm.

Il est avantageux que la fibre présente aussi une ou plusieurs des caractéristiques suivantes :

- une dispersion chromatique inférieure ou égale à -20 ps/(nm.km), voire à -50 ps/(nm.km) à 1550 nm;
- un comportement monomode en câble dans la bande C, typiquement en dessous de 1580 nm;
- un comportement monomode en câble dans la bande L, typiquement en dessous de 1620 nm;
- une atténuation inférieure à 1 dB/km, voire à 0,8 dB/km à 1550 nm;
- un rapport entre la dispersion chromatique et l'atténuation inférieur ou égal à-100 ps/(nm.dB) à 1550 nm, et de préférence à -150 ps/(nm.dB) à 1550 nm ;
- une aire effective supérieure à 12 $\mu$m$^2$, voire 15 $\mu$m$^2$, et de préférence 20 $\mu$m$^2$ à 1550 nm;
- des pertes par courbures inférieures à 400 dB/m, voire à 100 dB/m pour un enroulement de la fibre autour d'un manchon de rayon 10 mm, de 1530 nm à 1620 nm;
- des pertes par courbures inférieures à 0.05 dB, voire à 10$^{-3}$ dB pour un enroulement de 100 tours avec un rayon de 30 mm, de 1530 nm à 1620 nm;
- une sensibilité aux micro-courbures inférieure à inférieure ou égale à 1, ou de préférence inférieure ou égale à 0,5 à 1550 nm ;

Le comportement monomode dans la bande C ou dans la bande L assure une propagation correcte de la lumière dans la fibre de compensation de dispersion. Les valeurs de l'atténuation et du rapport entre la dispersion chromatique et l'atténuation assurent que la fibre peut être utilisée dans un système de transmission avec un minimum d'incrément d'atténuation.

La valeur de l'aire effective permet d'utiliser la fibre même avec des puissances de transmission importantes, sans que les effets non-linéaires ne soient discriminants.

Les pertes par courbure sont évaluées de façon connue en soi; ces limites sur les pertes par courbure assurent que la fibre de compensation de dispersion peut être enroulée dans un répéteur, comme dans le mode de réalisation de la figure 1, ou supporte la mise en câble comme dans le mode de réalisation de la figure 2. La sensibilité de la fibre aux micro-courbures est évaluée de façon relative, par rapport à la fibre commercialisée par la demanderesse sous la référence ASMF 200; on peut employer la méthode d'écrasement de la fibre entre deux grilles, connue en soi.

Il est encore avantageux que la fibre présente des pertes par courbure acceptables pour une plage d'utilisation allant de 1530 à 1620 nm, et non seulement à 1550 nm; ceci limite les pertes dans toute la plage d'utilisation de la fibre.

La figure 3 montre une représentation schématique du profil d'indice de consigne d'une fibre selon l'invention; dans ce mode de réalisation, le profil d'indice est un profil d'indice du type rectangle, avec une tranchée enterrée et un anneau, qui présente, en partant du centre de la fibre:

- une partie centrale avec un indice sensiblement constant supérieur ou égal à l'indice de la gaine;
- une partie annulaire d'indice inférieur ou égal à l'indice de la gaine ; l'ensemble constituant un profil d'indice dit "en rectangle avec une tranchée enterrée

ou déprimée".

Autour de la tranchée enterrée, la fibre de la figure 3 présente un anneau, c'est-à-dire une partie d'indice supérieur à l'indice de la gaine, d'où le qualificatif de profil en rectangle avec une tranchée enterrée et un anneau.

La figure 4 montre encore un autre profil d'une fibre selon l'invention. Dans ce mode de réalisation, la fibre présente un profil en trapèze avec une tranchée enterrée et un anneau. Autrement dit, en partant du centre de la fibre, on trouve:

- une partie centrale avec un indice sensiblement constant supérieur ou égal à l'indice de la gaine;
- une partie annulaire d'indice inférieur ou égal à l'indice de la gaine ; ces deux parties étant séparées par une partie annulaire dans laquelle l'indice décroît, de façon sensiblement linéaire. L'ensemble constitue un profil d'indice dit "en trapèze avec une tranchée enterrée ou déprimée".

Autour de cette tranchée enterrée, on trouve comme dans le mode de réalisation de la figure 3 un anneau.

Les valeurs d'indices et de rayons de divers exemples de fibres ayant un profil du genre de celui des figures 3 et 4 sont données dans le tableau 1; dans ce tableau, le rectangle central présente un rayon $r_1$ et son indice présente avec l'indice de la gaine une différence $\Delta n_1$, la petite base du trapèze présente un rayon $r_{1a}$ et son indice présente avec l'indice de la gaine une différence $\Delta n_1$ puis l'indice décroît de façon sensiblement linéaire pour passer de la valeur $\Delta n_1$ à la valeur $\Delta n_2$; on note $r_1$ le rayon pour lequel l'indice est égal à l'indice de la silice. La tranchée enterrée s'étend entre les rayons $r_{1b}$ et $r_2$, et son indice présente avec l'indice de la gaine une différence $\Delta n_2$. Enfin, l'anneau s'étend entre les rayons $r_2$ et $r_3$, et son indice présente avec l'indice de la gaine une différence $\Delta n_3$. Les profils des fibres 1 à 4 sont des profils en rectangle, et les profils des fibres 5 à 7 sont des profils en trapèze.

Tableau 1

|  | $r_{1a}$ (µm) | $r_1$ (µm) | $r_{1b}$ (µm) | $r_2$ (µm) | $r_3$ (µm) | $10^3\Delta n_1$ | $10^3\Delta n_2$ | $10^3\Delta n_3$ |
|---|---|---|---|---|---|---|---|---|
| Fibre 1 | 1,65 | 1,65 | 1,65 | 5 | 6,7 | 20,4 | -6,5 | 7 |
| Fibre 2 | 1,7 | 1,7 | 1,7 | 5,9 | 7,6 | 20,4 | -7,5 | 10,8 |
| Fibre 3 | 1,8 | 1,8 | 1,8 | 5,8 | 7,4 | 18,5 | -6,9 | 10,9 |
| Fibre 4 | 1,8 | 1,8 | 1,8 | 5,7 | 7,2 | 17,6 | -5,3 | 11,2 |
| Fibre 5 | 1,35 | 1,8 | 1,95 | 5,75 | 7,4 | 20,5 | -6,9 | 11 |
| Fibre 6 | 1,3 | 1,7 | 1,85 | 6 | 7,65 | 21,5 | -7 | 11 |
| Fibre 7 | 1,3 | 1,8 | 1,9 | 5,6 | 7,15 | 20,5 | -5,3 | 11 |

Dans tous les cas relatifs à l'invention (exemples 2 à 7), les différences d'indice entre le coeur la gaine sont au maximum de $21,510^{-3}$; autrement dit, la différence entre l'indice en tout point de la fibre et l'indice de la gaine est inférieure à $25.10^{-3}$. Ce choix assure que la fabrication de la fibre reste simple, et que l'atténuation est limitée. Le facteur de mérite est donc plus élevé que dans les fibres de l'état de la technique.

La fibre 1 est donnée à titre de comparaison; elle présente une longueur d'onde de coupure théorique inférieure à celle de l'invention; on constate dans le tableau de la figure 2 que cette fibre présente, ceteris paribus, une surface effective plus faible et un facteur de mérite plus faible en valeur absolue que les fibres 4 et 7 de l'invention.

Ces valeurs permettent d'obtenir des fibres présentant les caractéristiques de propagation données dans le tableau 2, où :

- $\lambda_{cth}$ est la longueur d'onde de coupure théorique en nm;
- $S_{eff}$ est l'aire effective à 1550 nm en $\mu m^2$;
- C est la dispersion chromatique à 1550 nm en ps/(nm.km);
- C' est la pente de dispersion chromatique à 1550 nm en ps/(nm².km);
- C/C' est le rapport entre la dispersion chromatique et la pente de dispersion chromatique à 1550 nm, en nm;
- $\alpha$ est l'atténuation à 1550 nm, en dB/km;
- C/$\alpha$ est le rapport entre la dispersion chromatique et l'atténuation en ps/(nm.dB);
- $PC_{1550}$ est la valeur des pertes par courbures à 1550 nm, en dB/m, pour un enroulement de la fibre autour d'un manchon de 10 mm de rayon;

- $PC_{1620}$ est la valeur des pertes par courbures à 1620 nm, en dB/m, pour un enroulement de la fibre autour d'un manchon de 10 mm de rayon;
- $S_{\mu c}$ est la sensibilitè aux micro-courbures mesurée comme expliqué ci-dessus à 1550 nm

Tableau 2

|   | $\lambda_{cth}$ nm | $S_{eff}$ $\mu m^2$ | C ps/(nm.km) | C/C' nm | $\alpha$ dB/km | C/$\alpha$ ps/nm.dB | $PC_{1550}$ dB/m | $PC_{1620}$ dB/m | $S_{\mu c}$ |
|---|---|---|---|---|---|---|---|---|---|
| 1 | 1710 | 18 | -85 | 315 | >0.60 | >-150 | 0,1 | 5 | <0.5 |
| 2 | 2015 | 16 | -80 | 135 | <0.65 | <-130 | 0,2 | 15 | <0.5 |
| 3 | 2010 | 19 | -82 | 170 | <0.5 | <-150 | 0,3 | 15 | <0.5 |
| 4 | 2010 | 23 | -81 | 305 | <0.5 | <-150 | 0,2 | 5 | <0.5 |
| 5 | 2100 | 17 | -110 | 130 | <0.65 | <-150 | 0,6 | 40 | <0.5 |
| 6 | 2070 | 20 | -115 | 165 | <0.6 | <-200 | 0,3 | 20 | <0.5 |
| 7 | 2050 | 21 | -110 | 290 | <0.6 | <-200 | 0,3 | 10 | <0.5 |

La longueur d'onde de coupure donnée ici est la longueur d'onde de coupure théorique; dans la pratique, la longueur d'onde de coupure mesurée sur câble est inférieure de plusieurs centaines de nm ; on comprend que la fibre est effectivement monomode dans la plage de longueurs d'onde des signaux utiles, notamment dans la bande C et le cas échéant dans la bande L.

Les propriétés des fibres de l'invention permettent leur utilisation comme fibres de compensation de dispersion, comme proposé plus haut :

Dans tous les exemples du tableau 1, des variations de 5 % de l'indice $\Delta n_1$ de la partie centrale, ou de 10% des indices $\Delta n_2$ et $\Delta n_3$ de la tranchée enterrée et de l'anneau permettent d'obtenir des résultats similaires. Il en est de même des rayons, qui peuvent varier de 10% pour $r_1$ et $r_2$ et de 5% pour $r_3$ par rapport aux valeurs données dans les exemples du tableau de la figure 1, tout en obtenant des résultats analogues.

De façon générale, on peut qualifier le profil de la fibre comme suit. D'une part, le profil est un profil en trapèze ou en rectangle avec une tranchée enterrée ou déprimée, et un anneau. La partie centrale présente une différence avec l'indice de la gaine qui vérifie

$$16.10^{-3} \leq \Delta n_1 \leq 24.10^{-3}$$

On peut appeler $r_1$ comme indiqué plus haut le rayon de la partie d'indice supérieur à l'indice de la gaine - l'indice étant constant en dessous de $r_1$ pour un profil en rectangle, mais pas pour un profil en trapèze. Dans ce cas, il est avantageux que le rayon $r_1$ exprimé en micromètres vérifie

$$1,5 \leq r_1 \leq 2,3 \ \mu m$$

Pour la tranchée enterrée, on peut choisir les valeurs de différence d'indice $\Delta n_2$ et de rayon extérieur $r_2$ de sorte à vérifier :

$-7,5.10^{-3} \leq \Delta n_2 \leq -3,5.10^{-3}$
et $4,5 \leq r_2 \leq 6,9 \ \mu m$

Pour l'anneau, on peut choisir les valeurs de différence d'indice $\Delta n_3$ et de rayon extérieur $r_3$ de sorte à vérifier :

$3.10^{-3} \leq \Delta n_3 \leq 16.10^{-3}$, voire de préférence $3.10^{-3} \leq \Delta n_3 \leq 14.10^{-3}$
et $6,8 \leq r_3 \leq 8,5 \ \mu m$

D'autres caractérisations de la fibre sont possibles. Ainsi, on peut utiliser le paramètre $S_1$ défini par

$$S_1 = 2. \int_0^{r_1} \Delta n(r) r \, dr$$

Ce paramètre est homogène au produit d'une surface par un indice. Ce paramètre s'applique simplement au profil en trapèze comme au profil en rectangle, et est représentatif de l'augmentation d'indice au voisinage du coeur de la fibre. Il vérifie de préférence :

$40.10^{-3} \le S_1 \le 100.10^{-3} \, \mu m^2$, voire de préférence
$50.10^{-3} \le S_1 \le 80.10^{-3} \, \mu m^2$.

On peut encore utiliser le paramètre S2, défini par

$$S_2 = 3. \int_0^{r_1} \Delta n(r) r^2 \, dr$$

Physiquement, ce paramètre est représentatif de la correspondance entre un profil en rectangle et un profil en trapèze, dans la théorie des fibres équivalentes. Ce paramètre vérifie de préférence :

$60.10^{-3} \le S_2 \le 200.10^{-3} \, \mu m^3$, voire de préférence
$70.10^{-3} \le S_2 \le 150.10^{-3} \, \mu m^3$.

Pour caractériser l'anneau, on peut utiliser le paramètre $S_3$, défini par

$$S_3 = 2. \int_{r_2}^{r_3} \Delta n(r) r \, dr$$

qui correspond pour l'anneau au paramètre $S_1$. Il est donc avantageux que

$140.10^{-3} \le S_3 \le 350.10^{-3} \, \mu m^2$, voire de préférence
$160.10^{-3} \le S_3 \le 310.10^{-3} \, \mu m^2$.

La fibre de l'invention peut être fabriquée par l'homme du métier à l'aide de techniques connues, comme le MCVD, l'OVD ou les autres techniques couramment utilisées pour la fabrication des fibres optiques.

Bien entendu, la présente invention n'est pas limitée aux exemples et modes de réalisation décrits et représentés, mais elle est susceptible de nombreuses variantes accessibles à l'homme de l'art. Il est clair que les profils des figures 3 & 4 et les exemples de rayons et d'indices ne sont donnés qu'à titre d'exemple, et que d'autres profils peuvent permettre d'obtenir des fibres présentant les caractéristiques de l'invention. La fibre de l'invention peut être utilisée comme dans le mode de réalisation de la figure 1 dans un système de transmission à répéteurs, mais aussi dans un système de transmission sans répéteurs. On peut utiliser dans un module de compensation de dispersion plus d'un amplificateur, et par exemple un amplificateur après comme avant la fibre de compensation de dispersion.

## Revendications

1. Une fibre optique avec un profil d'indice en rectangle ou trapèze avec une tranchée déprimée et un anneau présentant une longueur d'onde de coupure théorique supérieure ou égale à 1800 nm, une dispersion chromatique négative et supérieure ou égale à -150 ps/(nm.km) et un rapport entre la dispersion chromatique et la pente de dispersion chromatique entre 30 et 500 nm pour une longueur d'onde de 1550 nm, la différence ($\Delta n_1$) entre l'indice du rectangle ou du trapèze et l'indice de la gaine est comprise entre $16.10.10^{-3}$ et $24-10^{-3}$, et en ce que le rayon ($r_1$) de la partie de la fibre présentant un indice supérieure à celui de la gaine est compris entre 1,5 et 2.3 $\mu m$, la différence ($\Delta n_2$) entre l'indice de la tranchée déprimée et l'indice de la gaine est comprise entre $-7,5.10^{-3}$ et $-3,5.10^{-3}$, en ce que le rayon extérieur ($r_2$) de cette tranchée est compris entre 4,5 et 6,9 $\mu m$, la différence ($\Delta n_3$) entre l'indice de l'anneau et l'indice de la gaine est comprise entre 3.10⁻³ et 16.10⁻³, et en ce que le rayon extérieur ($R_3$) de cet anneau est compris entre 6,8 et 8,5 $\mu$m, et le double de l'intégrale du produit du rayon par l'indice entre le rayon intérieur et le rayon extérieur de l'anneau est compris entre 140.10⁻³ et 350.10⁻³ $\mu m^2$.

2. La fibre de la revendication 1, **caractérisée en ce qu'**elle présente des pertes par courbure inférieures à 400 dB/m, et de préférence inférieures à 100 dB/m, pour une longueur d'onde entre 1530 et 1620 nm lorsque la fibre est enroulée sur un manchon de 10 mm de rayon.

3. La fibre de la revendication 1 ou 2, **caractérisée en ce qu'**elle présente des pertes par courbure inférieures à 0,05 dB, et de préférence inférieures à 10⁻³ dB, pour une longueur d'onde entre 1530 et 1620 nm, pour un enroulement de 100 tours sur un manchon de 30 mm de rayon.

4. La fibre de la revendication 1, 2 ou 3, **caractérisée en ce qu'**elle présente un rapport entre la dispersion chromatique et l'atténuation inférieur ou égal à - 100 ps/(nm.dB), et de préférence inférieur ou égale à -150 ps/(nm.dB), pour une longueur d'onde entre 1530 et 1620 nm.

5. La fibre de l'une des revendications 1 à 4, **caractérisée en ce qu'**elle présente pour une longueur d'onde de 1550 nm une aire effective supérieure ou égale à 12 $\mu m^2$, de préférence supérieure ou égale à 15 $\mu m^2$, voire à 20 $\mu m^2$.

6. La fibre de l'une des revendications 1 à 5, **caractérisée en ce qu'**elle présente une dispersion chromatique inférieure ou égale à -20 ps nm.km), de préférence inférieure ou égale à -50 ps/(nm.km), pour une longueur d'onde de 1550 nm.

7. La fibre de l'une des revendications 1 à 6, **caractérisée en ce qu'**elle présente pour une longueur d'onde de 1550 nm une sensibilité aux micro-courbures inférieure ou égale à 1, et de préférence inférieure ou égale à 0,5.

8. La fibre de l'une des revendications 1 à 7, **caractérisée en ce qu'**elle présente une différence entre l'indice en tout point de la fibre et l'indice de la gaine inférieure ou égale à 30.10⁻³, et de préférence inférieure ou égale à 25.10⁻³.

9. La fibre de l'une des revendications 1 à 8, **caractérisée en ce qu'**elle présente une dispersion modale de polarisation inférieure ou égale à 0,5 ps/km½.

10. La fibre de l'une des revendications 1 à 9, **caractérisée en ce qu'**elle présente une atténuation inférieure à 1 dB/km et de préférence inférieure à 0,8 dB/km.

11. La fibre de l'une des revendications 1 à 10, **caractérisée en ce qu'**elle présente une longueur d'onde de coupure théorique supérieure ou égaie à 1850 nm.

12. La fibre de la revendication 1, **caractérisée en ce que** le double de l'intégrale du produit du rayon par l'indice entre un rayon nul et le rayon ($r_1$) extérieur de la partie centrale de la fibre présentant un indice supérieur à celui de la gaine est compris entre 40.10⁻³ et 100.10⁻³ $\mu m^2$, de préférence entre 50.10⁻³ et 80.10⁻³ $\mu m^2$.

13. La fibre de l'une des revendications 1 à 2, **caractérisée en ce que** le triple de l'intégrale du produit du carré du rayon par l'indice entre un rayon nul et le rayon ($r_1$) extérieur de la partie centrale de la fibre présentant un indice supérieur à celui de la gaine est compris entre 60.10⁻³ et 200.10⁻³ $\mu m^3$, de préférence entre 70.10⁻³ et 150.10⁻³ $\mu m^3$.

14. La fibre de l'une des revendications 1 à 13, **caractérisée en ce que** la double de l'intégrale du produit du rayon par l'indice entre le rayon intérieur et le rayon extérieur de l'anneau est compris entre 140.10⁻³ et 350.10⁻³ $\mu m^2$, de préférence entre 160.10⁻³ et 310.10⁻³ $\mu m^2$.

15. Un système de transmission, dont la fibre de ligne comprend une fibre monomode à saut d'indice ($4_i$, $12_i$), compensée en dispersion par une fibre selon l'une des revendications 1 à 14.

16. Un système de transmission, dont la fibre de ligne comprend une fibre à dispersion décalée ($4_i$, $12_i$), compensée en dispersion par une fibre selon l'une des revendications 1 à 14.

17. Le système de la revendication 15 ou 16, **caractérisé en ce que** la dispersion chromatique cumulée pour chaque canal entre 1530 nm et 1610 nm est inférieure à 100 ps/nm, et de préférence inférieure à 50 ps/nm, en moyenne sur 100 km de transmission.

**18.** Le système de la revendication 15 ou 17, **caractérisé en ce que** la fibre de ligne est constitués de fibre monomode à saut d'indice.

**19.** Le système de la revendication 15 ou 17, **caractérisé en ce que** la fibre de ligne est constituée de fibre monomode à saut d'indice et de fibre ($13_i$) selon l'une des revendications 1 à 14.

**20.** Le système de la revendication 16 ou 17, **caractérisé en ce que** la fibre de ligne est constituée de fibre à dispersion décalée.

**21.** Le système de la revendication 16 ou 17, **caractérisé en ce que** la fibre de ligne est constituée de fibre à dispersion décalée et de fibre ($13_i$) selon l'une des revendications 1 à 14.

**22.** Un module de compensation de dispersion, comprenant un amplificateur et une section de fibre selon l'une des revendications 1 à 14.


**Patentansprüche**

**1.** Lichtleitfaser mit einem rechteckigen oder trapezförmigen Indexprofil mit einem abgesenkten Graben und einem Ring, die eine theoretische Grenzwellenlänge hat, die größer oder gleich 1800 nm ist, eine negative chromatische Dispersion, die größer oder gleich -150 ps/(nm•km) ist, und ein Verhältnis zwischen der chromatischen Dispersion und der Steigung der chromatischen Dispersion, die für eine Wellenlänge von 1550 nm zwischen 30 und 500 nm beträgt, wobei die Differenz ($\Delta n_1$) zwischen dem Index des Rechtecks oder des Trapez und dem Index des Mantels zwischen $16•10^{-3}$ und $24•10^{-3}$ beträgt und der Radius ($r_1$) des Teils der Faser, dessen Index größer ist als der des Mantels, zwischen 1,5 und 2,3 $\mu$m beträgt, wobei die Differenz ($\Delta n_2$) zwischen dem Index des abgesenkten Grabens und dem Index des Mantels zwischen $-7,5•10^{-3}$ und $-3,5•10^{-3}$ beträgt und der Außenradius ($r_2$) dieses Grabens zwischen 4,5 und 6,9 $\mu$m beträgt, wobei die Differenz ($\Delta n_3$) zwischen dem Index des Rings und dem Index des Mantels zwischen $3•10^{-3}$ und $16•10^{-3}$ beträgt und der Außenradius ($r_3$) dieses Rings zwischen 6,8 und 8,5 $\mu$m beträgt und das Doppelte des Integrals des Produkts des Radius mit dem Index zwischen dem Innenradius und dem Außenradius des Rings zwischen $140•10^{-3}$ und $350•10^{-3}$ $\mu$m$^2$ beträgt.

**2.** Faser nach Anspruch 1, **dadurch gekennzeichnet, dass** sie für eine Wellenlänge zwischen 1530 und 1620 nm Biegeverluste von weniger als 400 dB/m, vorzugsweise von weniger als 100 dB/m hat, wenn die Faser auf eine Hülse mit einem Radius von 10 mm gewickelt ist.

**3.** Faser nach Anspruch 1 oder 2, **dadurch gekennzeichnet, dass** sie für eine Wellenlänge zwischen 1530 und 1620 nm und für eine Wicklung mit 100 Windungen auf einer Hülse mit einem Radius von 30 mm Biegeverluste von weniger als 0,05 dB, vorzugsweise von weniger als $10^{-3}$ dB hat.

**4.** Faser nach Anspruch 1, 2 oder 3, **dadurch gekennzeichnet, dass** sie für eine Wellenlänge zwischen 1530 und 1620 nm ein Verhältnis zwischen der chromatischen Dispersion und der Dämpfung hat, das kleiner oder gleich -100 ps/(nm•dB), vorzugsweise kleiner oder gleich -150 ps/(nm•dB) ist.

**5.** Faser nach einem der Ansprüche 1 bis 4, **dadurch gekennzeichnet, dass** sie für eine Wellenlänge von 1550 nm eine effektive Fläche hat, die größer oder gleich 12 $\mu$m$^2$, vorzugsweise größer oder gleich 15 $\mu$m$^2$ und sogar größer oder gleich 20 $\mu$m$^2$ ist.

**6.** Faser nach einem der Ansprüche 1 bis 5, **dadurch gekennzeichnet, dass** sie für eine Wellenlänge von 1550 nm eine chromatische Dispersion hat, die kleiner oder gleich -20 ps/(nm•km), vorzugsweise kleiner oder gleich -50 ps/(nm•km) ist.

**7.** Faser nach einem der Ansprüche 1 bis 6, **dadurch gekennzeichnet, dass** sie für eine Wellenlänge von 1550 nm eine Empfindlichkeit gegenüber Mikrobiegungen hat, die kleiner oder gleich 1 und vorzugsweise kleiner oder gleich 0,5 ist.

**8.** Faser nach einem der Ansprüche 1 bis 7, **dadurch gekennzeichnet, dass** sie eine Differenz zwischen dem Index in jedem Punkt der Faser und dem Index des Mantels hat, die kleiner oder gleich $30•10^{-3}$ und vorzugsweise kleiner oder gleich $25•10^{-3}$ ist.

**9.** Faser nach einem der Ansprüche 1 bis 8, **dadurch gekennzeichnet, dass** sie eine Polarisationsmodendispersion hat, die kleiner oder gleich 0,5 ps/km$^{1/2}$ ist.

**10.** Faser nach einem der Ansprüche 1 bis 9, **dadurch gekennzeichnet, dass** sie eine Dämpfung von weniger als 1 dB/km und vorzugsweise von weniger als 0,8 dB/km hat.

**11.** Faser nach einem der Ansprüche 1 bis 10, **dadurch gekennzeichnet, dass** sie eine theoretische Grenzwellenlänge hat, die größer oder gleich 1850 nm ist.

**12.** Faser nach Anspruch 1, **dadurch gekennzeichnet, dass** das Doppelte des Integrals des Produkts des Radius mit dem Index zwischen einem Radius von Null und dem Außenradius ($r_1$) des mittleren Teils der Faser, dessen Index größer ist als der des Mantels, zwischen $40 \cdot 10^{-3}$ und $100 \cdot 10^{-3}$ $\mu m^2$, vorzugsweise zwischen $50 \cdot 10^{-3}$ und $80 \cdot 10^{-3}$ $\mu m^2$ beträgt.

**13.** Faser nach einem der Ansprüche 1 bis 2, **dadurch gekennzeichnet, dass** das Dreifache des Integrals des Produkts des Quadrats des Radius mit dem Index zwischen einem Radius von Null und dem Außenradius ($r_1$) des mittleren Teils der Faser, dessen Index größer ist als der des Mantels, zwischen $60 \cdot 10^{-3}$ und $200 \cdot 10^{-3}$ $\mu m^3$, vorzugsweise zwischen $70 \cdot 10^{-3}$ und $150 \cdot 10^{-3}$ $\mu m^3$ beträgt.

**14.** Faser nach einem der Ansprüche 1 bis 13, **dadurch gekennzeichnet, dass** das Doppelte des Integrals des Produkts des Radius mit dem Index zwischen dem Innenradius und dem Außenradius des Rings zwischen $140 \cdot 10^{-3}$ und $350 \cdot 13^{-3}$ $\mu m^2$, vorzugsweise zwischen $160 \cdot 10^{-3}$ und $310 \cdot 10^{-3}$ $\mu m^2$ beträgt.

**15.** Übertragungssystem, dessen Leitungsfaser eine Monomode-Stufenindexfaser ($4_i$, $12_i$) umfasst, die durch eine Faser nach einem der Ansprüche 1 bis 14 dispersionskompensiert ist.

**16.** Übertragungssystem, dessen Leitungsfaser eine Faser mit versetzter Dispersion ($4_i$, $12_i$) umfasst, die durch eine Faser nach einem der Ansprüche 1 bis 14 dispersionskompensiert ist.

**17.** System nach Anspruch 15 oder 16, **dadurch gekennzeichnet, dass** die kumulierte chromatische Dispersion für jeden Kanal zwischen 1530 nm und 1610 nm auf 100 km Übertragung im Durchschnitt weniger als 100 ps/nm und vorzugsweise weniger als 50 ps/nm beträgt.

**18.** System nach Anspruch 15 oder 17, **dadurch gekennzeichnet, dass** die Leitungsfaser aus einer Monomode-Stufenindexfaser besteht.

**19.** System nach Anspruch 15 oder 17, **dadurch gekennzeichnet, dass** die Leitungsfaser aus einer Monomode-Stufenindexfaser und einer Faser ($13_i$) nach einem der Ansprüche 1 bis 14 besteht.

**20.** System nach Anspruch 16 oder 17, **dadurch gekennzeichnet, dass** die Leitungsfaser aus einer Faser mit versetzter Dispersion besteht.

**21.** System nach Anspruch 16 oder 17, **dadurch gekennzeichnet, dass** die Leitungsfaser aus einer Faser mit versetzter Dispersion und einer Faser ($13_i$) nach einem der Ansprüche 1 bis 14 besteht.

**22.** Dispersionskompensationsmodul mit einem Verstärker und einem Faserabschnitt nach einem der Ansprüche 1 bis 14.

**Claims**

**1.** Optical fibre having a rectangular or trapezoidal index profile with a depressed trench and a ring having a theoretical cut-off wavelength greater than or equal to 1800 nm, a negative chromatic dispersion greater than or equal to -150 ps/(nm.km) and a ratio between the chromatic dispersion and the chromatic dispersion slope between 30 and 500 nm for a wavelength of 1550 nm, the difference ($\Delta n_1$) between the index of the rectangle or trapezium and the index of the cladding is between $16.10^{-3}$ and $24.10^{-3}$ and in that the radius ($r_1$) of the part of the fibre having an index greater than that of the cladding is between 1.5 and 2.3 $\mu m$, the difference ($\Delta n_2$) between the index of the depleted trench and the index of the cladding is between $-7.5.10^{-3}$ and $-3.5.10^{-3}$, in that the outside radius ($r_2$) of this trench

is between 4.5 and 6.9 $\mu$m, the difference ($\Delta n_3$) between the index of the ring and the index of the cladding is between $3.10^{-3}$ and $16.10^{-3}$, and in that the outside radius ($r_3$) of this ring is between 6.8 and 8.5 $\mu$m and twice the integral of the product of the radius and the index between the inside radius and the outside radius of the ring is between $140.10^{-3}$ and $350.10^{-3}$ $\mu$m$^2$.

2. Fibre according to claim 1, **characterized in that** it has bending losses less than 400 dB/m and preferably less than 100 dB/m for a wavelength between 1530 and 1620 nm when the fibre is wound on a sleeve of 10 mm radius.

3. Fibre according to claim 1 or 2, **characterized in that** it has bending losses less than 0.05 dB and preferably less than $10^{-3}$ dB for a wavelength between 1530 and 1620 nm for a winding of 100 turns on a sleeve of 30 mm radius.

4. Fibre according to claim 1, 2 or 3, **characterized in that** it has a ratio between the chromatic dispersion and attenuation less or equal to -100 ps/(nm.dB) and preferably less than or equal to -150 ps/(nm.dB) for a wavelength between 1530 and 1620 nm.

5. Fibre according to any one of claims 1 to 4, **characterized in that** it has for a wavelength of 1550 nm an effective area greater than or equal to 12 $\mu$m$^2$, preferably greater than or equal to 15 $\mu$m$^2$, or even 20 $\mu$m$^2$.

6. Fibre according to any one of claims 1 to 5, **characterized in that** it has a chromatic dispersion less than or equal to -20 ps/(nm.km), preferably less than or equal to -50 ps/(nm.km) for a wavelength of 1550 nm.

7. Fibre according to any one of claims 1 to 6, **characterized in that** it has for a wavelength of 1550 nm a sensitivity to microbending less than or equal to 1 and preferably less than or equal to 0.5.

8. Fibre according to any one of claims 1 to 7, **characterized in that** it has a difference between the index at every point of the fibre and the index of the cladding less than or equal to $30.10^{-3}$ and preferably less than or equal to $25.10^{-3}$.

9. Fibre according to any one of claims 1 to 8, **characterized in that** it has a polarization mode dispersion less than or equal to 0.5 ps/km$^{1/2}$.

10. Fibre according to any one of claims 1 to 9, **characterized in that** it has an attenuation less than 1 dB/km and preferably less than 0.8 dB/km.

11. Fibre according to any one of claims 1 to 10, **characterized in that** it has a theoretical cut-off wavelength greater than or equal to 1850 nm.

12. Fibre according to claim 1, **characterized in that** twice the integral of the product of the radius and the index between a zero radius and the outside radius ($r_1$) of the central portion of the fibre having an index greater than that of the cladding is between $40.10^{-3}$ and $100.10^{-3}$ $\mu$m$^2$, preferably between $50.10^{-3}$ and $80.10^{-3}$ $\mu$m$^2$.

13. Fibre according to either one of claims 1 or 2, **characterized in that** three times the integral of the product of the square of the radius and the index between a zero radius and the outside radius ($r_1$) of the central portion of the fibre having an index greater than that of the cladding is between $60.10^{-3}$ and $200.10^{-3}$ $\mu$m$^2$, preferably between $70.10^{-3}$ and $150.10^{-3}$ $\mu$m$^2$.

14. Fibre according to any one of claims 1 to 13, **characterized in that** twice the integral of the product of the radius and the index between the inside radius and the outside radius of the ring is between $140.10^{-3}$ and $350.10^{-3}$ $\mu$m$^2$, preferably between $160.10^{-3}$ and $310.10^{-3}$ $\mu$m$^2$.

15. Transmission system wherein the line fibre comprises a monomode step index fibre ($4_i$, $12_i$) dispersion compensated by a fibre according to any one of claims 1 to 14.

16. Transmission system wherein the line fibre comprises a dispersion shifted fibre ($4_i$, $12_i$) dispersion compensated by a fibre according to any one of claims 1 to 14.

17. System according to claim 15 or 16, **characterized in that** the cumulative chromatic dispersion for each channel between 1530 nm and 1610 nm is less than 100 ps/nm and preferably less than 50 ps/nm averaged over 100 km transmission.

**18.** System according to claim 15 or 17, **characterized in that** the line fibre consists of monomode step index fibre.

**19.** System according to claim 15 or 17, **characterized in that** the line fibre consists of monomode step index fibre ($13_i$) according to any one of claims 1 to 14.

**20.** System according to claim 16 or 17, **characterized in that** the line fibre consists of dispersion shifted fibre.

**21.** System according to claim 16 or 17, **characterized in that** the line fibre consists of dispersion shifted fibre ($13_i$) according to any one of claims 1 to 14.

**22.** Dispersion compensation module comprising an amplifier and a section of fibre according to any one of claims 1 to 14.

FIG_1

FIG_2

FIG_3

FIG_4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2790107 A
- EP 0935146 A
- US 5568583 A
- US 5361319 A
- EP 0668520 A
- WO 9913366 A
- EP 0674193 A
- US 5838867 A
- US 5999679 A